Europäisches Patentamt

European Patent Office

Office européen des brevets

(11) Publication number: 0 197 667

A1

## (12) EUROPEAN PATENT APPLICATION

(21) Application number: 86301750.5

(22) Date of filing: 11.03.86

(51) Int. Cl.4: G01F 23/24

The title of the invention has been amended (Guidelines for Examination in the EPO, A-III, 7.3).

(30) Priority: 13.03.85 ZA 851867

(43) Date of publication of application:
15.10.86 Bulletin 86/42

(84) Designated Contracting States:
AT BE CH DE FR GB IT LI LU NL SE

(71) Applicant: Condeplan (Pty) Limited
11 Bottlebrush Street
Ferndale Ext. 6 Randburg 2914(ZA)

(72) Inventor: Gent, Peter W.F.
11 Bottlebrush Street Ferndale
Ext.6 Randburg 2194(ZA)

(74) Representative: Williams, Trevor John et al
J.A. KEMP & CO. 14 South Square Gray's Inn
London WC1R 5EU(GB)

(54) Electrical-conductivity probe.

(57) A high pressure electrical conductivity probe - (10) suitable for determining the liquid level in a high pressure vessel such as a steam boiler. A metal mounting body (14) has a bore (14.1) therethrough to accommodate a rod member (12.1) without making electrical contact therewith. A cylindrical insulator (18) capable of withstanding high temperatures and pressures has a bore (18.1) therethrough adapted to receive the rod member (12.1) and being mountable on the rod member electrically to insulate the metal mounting body (14) from a head connected to one end of the rod member to form an electrode connector. A sealing gasket ring (20) is provided at either end of the insulator (18) with the insulator being maintained in compression between the head member and the metal mounting body (14). An external terminal (30) on the probe is electrically connected to the electrode connector and electrically insulated from the metal mounting body (14) so that an electrical circuit may be completed by a conductive liquid coming into contact with both the electrode connector and the wall (16) of the pressure vessel to which the mounting body (14) is mounted.

PROBE

This invention relates to high pressure electrical conductivity probes. In particular, it relates to an electrical conductivity probe suitable for use in the determination of a level of liquid in a high pressure vessel such as a steam drum of a steam boiler.

In accordance with the invention, an electrical conductivity probe comprises;

-a conductive electrode connector including a rod member and a head member connected to one end of the rod member,

-a metal mounting body having a bore therethrough along its longitudinal axis, the bore being of a sufficient diameter to accommodate the rod member without making electrical contact therewith,

-means for mounting the metal mounting body to a side wall of the pressure vessel,

-a cylindrical insulator capable of withstanding high temperatures and pressures up to 21 MPa, the cylindrical insulator also having a bore therethrough along its longitudinal axis adapted to receive the rod member, the cylindrical insulator being mountable on the rod member to electrically insulate the metal mounting body from the head member,

-a ring-shaped sealing gasket at either end of the insulator, each gasket being capable of withstanding the said high temperatures and pressures,

-means for establishing the insulator in compression between the head member and the metal mounting body, and

-an external terminal on the probe electrically connected to the electrode connector and electrically insulated from the metal mounting body,

so that, when a conductive liquid comes into contact with both the head member and the wall of the pressure vessel, an electrical circuit may be completed.

The probe may comprise a secondary cylindrical insulator having a bore therethrough adapted to receive the rod member, the cylindrical insulator having a bore of sufficient diameter to accommodate both the secondary cylindrical insulator and the rod member, the cylindrical insulator and the secondary cylindrical insulator being mountable to the rod member to electrically insulate the metal mounting body from the electrode connector.

The other end of the rod member may be threaded and the compression means may comprise a nut co-acting with the threaded end, and a further cylindrical insulator having a bore therethrough adapted to receive the rod member and being adapted to separate the nut from the outside surface of the metal mounting body, the arrangement being such that when the nut is screwed in the direction of the head member, the insulator may be placed in compression between the head member and the metal mounting body, while the further insulator may be placed in compression between the nut and the outside surface of the metal mounting body. Preferably, a further gasket is provided between the further insulator and the metal mounting body. The further gasket may be adapted to absorb at least a portion of the difference in thermal expansion of the insulator and the metal mounting body.

In a preferred embodiment of the invention, at least one of the gaskets comprises asbestos fibres. Preferably, the flat surfaces of at least one of the gaskets is coated with graphite.

The electrical conductivity probe may also comprise a sheath adapted to sealingly envelop the cylindrical outer surfaces of the insulator and the gaskets. Conveniently, the sheath is a crimp-on or shrink tube adapted to shrink with the application or heat.

Also according to the invention, the rod member may be electrically insulated from the metal mounting body by means of an insulating tube provided annually between the rod member and the inside surface of the bore through the metal mounting body.

The invention will now be described, by way of example, with reference to the accompanying drawings in which

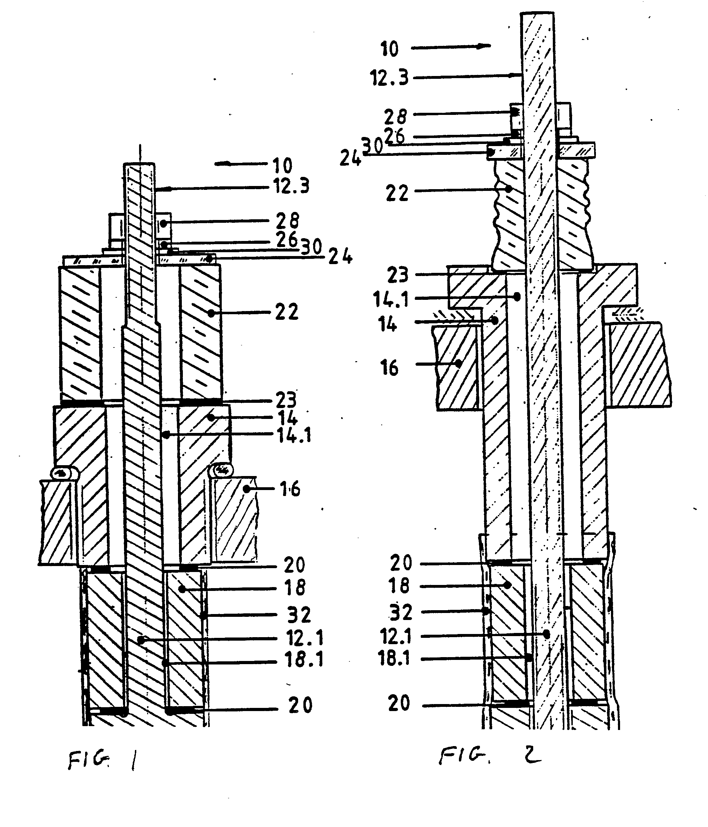

Figure 1 is a sectional view of one embodiment of an electrical conductivity probe in accordance with the invention,

Figure 2 is a cross-sectional view of another embodiment of an electrical conductivity probe in accordance with the invention.

In the drawings, reference numeral 10 generally indicates an electrical conductivity probe.

The probe 10 comprises a conductive electrode connector 12 including a rod member 12.1 and a head member 12.2 connected to one end of the rod member 12.1.

The probe 10 also comprises a metal mounting body 14 having a bore 14.1 therethrough along its longitudinal axis, the bore 14.1 being of a sufficient diameter to accommodate the rod member 12.1 without making electrical contact therewith.

Means for mounting the metal mounting body 14 to a side wall 16 of a pressure vessel is provided in the form of a screwthread on the outside surface of the metal mounting body 14.

The probe 10 further comprises a cylindrical insulator 18 capable of withstanding high temperatures and pressures up to 21 MPa, the cylindrical insulator also having a bore 18.1 therethrough along its longitudinal axis, the bore being of a sufficient diameter to accommodate the rod member 12.1 and a secondary insulator (not shown). The cylindrical insulator 18 is mountable on the rod member 12.1 to electrically insulate the metal mounting body 14 from the head 12.2 of the electrode connector 12.

The probe 10 further comprises a ring-shaped sealing gasket 20 made of compressed asbestos fibre, at either end of the insulator 18. The flat surfaces of the gaskets 20 are coated with graphite, so as to improve their resistance to the said high temperatures and pressures.

The end 12.3 of the rod member opposite the head member 12.2 is threaded. A further insulator 22 is provided on the outside of the metal mounting body 14, and is separated therefrom by a further gasket 23 adapted to absorb at least a portion of the difference in thermal expansion of the further insulator 22 and the metal mounting body 14. The further insulator 22 is also of tubular construction with an inside diameter sufficiently large to accommodate the rod member 12.1.

The rod member 12.1 extends through the insulator 18, the metal mounting body 14 and the further insulator 22. Washers 24, having an outside diameter more or less the same as the outside diameter of the further insulator 22, and a split washer 26, together with a nut 28 are respectively passed over the end 12.3 of the rod member 12.2 and screwed tight so as to establish the insulator 18 in compression between the head member 12.2 and the metal mounting body 14, while the further insulator 22 is placed in compression between the nut 28 and the outside surface of the metal mounting body 14.

An electrical terminal 30 is provided between the nut 28 and the washer 24, whereby the rod member may be electrically connected to an electric circuit (not shown). As can be seen in the drawings, the terminal 30, the rod member 12.1 and the head member 12.2 are all electrically connected to each other, but are electrically insulated from the metal mounting body 14 and the wall 16 of the pressure vessel.

The wall 16 of the pressure vessel is connected to the electric circuit. When a conductive liquid such as water in a boiler, comes into contact with both the wall 16 of the pressure vessel and the head 12.2 of the electrode connector, an electrical circuit between the wall 16 and the head 12.2 is completed, providing a switch whereby an electrical current flowing from the wall of the pressure vessel 16 to the head 12.2 of the electrode connector, or vice versa, may be employed to light up an indicator light on a panel. This could therefore be used as an indication that water in the pressure vessel has reached the level at which the probe 10 is located.

A shrink tube 32 is provided on the outside surfaces of the insulator 18 and the gaskets 20. Such shrink tubes are available commercially under the trade mark "VITON-A". The composition of the shrink tube is unknown to the applicant, and it is believed to be proprietary. It is, however, suitable for application with high temperatures and pressures as are encountered in steam boilers of the type referred to hereinbefore. The tube 32 is crimped onto the outside surfaces of the insulator 18 and the gaskets 20 by the applicatioin of heat.

**Claims**

1. An electrical conductivity probe comprising;

-a conductive electrode connector including a rod member and a head member connected to one end of the rod member;

-a metal mounting body having a bore therethrough along its longitudinal axis, the bore being of a sufficient diameter to accommodate the rod member without making electrical contact therewith,

-means for mounting the metal mounting body to a side wall of a pressure vessel,

-a cylindrical insulator capable of withstanding high temperatures and pressures up to 21 MPa, the cylindrical insulator also having a bore therethrough along its longitudinal axis, adapted to receive the rod member, the cylindrical insulator being mountable on the rod member to electrically insulate the metal mounting body from the head of the electrode connector,

-a ring-shaped sealing gasket adapted to be provided at either end of the insulator, each gasket being capable of withstanding the said high temperatures and pressures,

-means for establishing the insulator in compression between the head member and the metal mounting body, and

-an external terminal on the probe electrically connected to the electrode connector and electrically insulated from the metal mounting body,

so that, when a conductive liquid comes into contact with both the electrode connector and the wall of the pressure vessel, and electrical circuit may be completed.

2. An electrical conducting probe as claimed in claim 1, comprising a secondary cylindrical insulator having a bore therethrough adapted to receive the rod member, the cylindrical insulator having a bore of sufficient diameter to accommodate both the secondary cylindrical insulator and the rod member, the cylindrical insulator and the secondary cylindrical insulator being mountable to the rod member to electrically insulate the metal mounting body from the electrode connector.

3. An electrical conductivity probe as claimed in claim 1 or claim 2, in which the other end of the rod member is threaded and the compression means comprises a nut co-acting with the threaded end, and a further cylindrical insulator having a bore therethrough adapted to receive the rod member and to separate the nut from the outside surface of the metal mounting body, the arrangement being such that when the nut is screwed in the direction of the head member, the insulator is placed in compression between the head member and the metal mounting body, while the further insulator is placed in compression between the nut and the outside surface of the metal mounting body.

4. An electrical conductivity probe as claimed in claim 3, in which a further gasket is provided between the further insulator and the metal mounting body.

5. An electrical conductivity probe as claimed in claim 4, in which the further gasket is adapted to absorb at least a portion of the difference in thermal expansion of the further insulator and the metal mounting body.

6. An electrical conductivity probe as claimed in any one of claims 1 to 5, in which at least one of the gaskets comprises asbestos fibres.

7. An electrical conductivity probe as claimed in any one of the preceding claims, in which the flat surfaces of at least one of the gaskets is coated with graphite.

8. An electrical conductivity probe as claimed in any one of the preceding claims, comprising a sheath adapted to sealingly envelop the cylindrical outer surfaces of the insulator and the gaskets.

9. An electrical conductivity probe as claimed in claim 8 in which the sheath is a crimp-on or shrink tube adapted to shrink with the application of heat.

10. An electrical conductivity probe as claimed in any one of the preceding claims, in which the rod member is electrically insulated from the metal mounting body by means of an insulating tube provided annually between the rod member and the inside surface of the bore through the metal mounting body.

FIG. 1

FIG. 2

## DOCUMENTS CONSIDERED TO BE RELEVANT

EP 86301750.5

| Category | Citation of document with indication, where appropriate, of relevant passages | Relevant to claim | CLASSIFICATION OF THE APPLICATION (Int. Cl.4) |
|---|---|---|---|
| X | <u>GB - A - 2 127 976</u> (CLARK)<br>* Totality; especially fig. 1,3 * | 1-7,10 | G 01 F 23/24 |
| Y | | 8,9 | |
| | -- | | |
| X | <u>US - A - 3 158 682</u> (GOELLNER)<br>* Fig. 1-3 * | 1-4,6,10 | |
| Y | | 8,9 | |
| | -- | | |
| Y | <u>DE - A - 2 213 941</u> (MOTO METER)<br>* Fig.; page 4, 2nd paragraph - page 5, 3rd paragraph * | 8,9 | |
| | ---- | | |

|  | TECHNICAL FIELDS SEARCHED (Int. Cl.4) |
|---|---|
| | G 01 F 23/00 |

The present search report has been drawn up for all claims

| Place of search | Date of completion of the search | Examiner |
|---|---|---|
| VIENNA | 12-06-1986 | GRONAU |